# EUROPÄISCHE PATENTSCHRIFT

(11) **EP 2 118 679 B1**
(45) Veröffentlichungstag und Bekanntmachung des Hinweises auf die Patenterteilung: **25.08.2010**
(21) Anmeldenummer: 08708129.5
(22) Anmeldetag: 24.01.2008
(51) Int. Cl.: G01S 7/481, G01S 17/08, G01C 15/00, G01C 3/08

(54) **ENTFERNUNGSMESSGERÄT**
DISTANCE MEASURING UNIT
TÉLÉMÈTRE

(30) Priorität: 31.01.2007 DE 102007005725
(43) Veröffentlichungstag der Anmeldung: 18.11.2009
(73) Patentinhaber: Robert Bosch GmbH, 70442 Stuttgart (DE)
(72) Erfinder: WOLF, Peter, 70771 Leinfelden-Echterdingen (DE); SKULTETY-BETZ, Uwe, 70771 Leinfelden-Echterdingen (DE); STIERLE, Joerg, 71111 Waldenbuch (DE); HAASE, Bjoern, 70184 Stuttgart (DE); RENZ, Kai, 70771 Leinfelden-Echterdingen (DE)
(86) Internationale Anmeldenummer: PCT/EP2008/050786
(87) Internationale Veröffentlichungsnummer: WO 2008/092790

(56) Entgegenhaltungen:
- WO-A-2006/024566
- WO-A-2007/014812
- DE-A1- 10 055 510
- DE-A1- 10 142 166
- DE-A1- 10 344 586

## Beschreibung

### Stand der Technik

Die Erfindung geht aus von einem Entfernungsmessgerät zur berührungslosen Abstandsmessung, insbesondere einem Handgerät zur berührungslosen Abstandsmessung, nach dem Oberbegriff des Anspruchs 1.

Mit derartigen gattungsgemäßen Entfernungsmessgeräten wird typischerweise die Entfernung eines angemessenen Objektes von einem Referenzpunkt, an dem das Entfernungsmessgerät mit einem entsprechenden Messanschlag angelegt wird, gemessen. Solche Entfernungsmessgeräte können beispielsweise als Lasermessgerät, als Ultraschallmessgerät oder auch als Hochfrequenz- bzw. Radarmessgerät konzipiert sein. In allen Fällen wird die Entfernung durch direkte bzw. indirekte Messung der Laufzeit eines vom Messgerät ausgesandten modulierten Signals, welches an einem zu vermessenden Objekt reflektiert wird und von dem Messgerät anschließend wieder empfangen wird, bestimmt.

Aus der DE 43 163 48 A1 ist ein Entfernungsmessgerät bekannt, das für unterschiedliche Messaufgaben verwendet werden kann. So kann das Messgerät beispielsweise für den häufig vorkommenden Anwendungsfall einer Messung ausgehend von einer Innenfläche, wie beispielsweise einer Innenwand, eines Bodens oder einer Decke rückseitig, d.h. mit einer objektabgewandten Anschlagfläche an die Referenzfläche angelegt werden. Für den Fall, dass ausgehend von einer Außenkante gemessen werden soll, kann das bekannte Entfernungsmessgerät in Richtung auf das zu vermessende Objekt mit seiner Vorderseite, d.h. mit einer objektzugewandten Anschlagfläche an die Referenzfläche angelegt werden. Bei der Vorrichtung der DE 43 163 48 A1 sind Vorder- und Rückseite des Gerätes parallel zueinander ausgebildet.

Je nach Anwendungsfall wird als geräteseitiger Bezugs- bzw. Nullpunkt der Entfernungsmessung entweder die Vorderseite oder die Rückseite des Entfernungsmessgerätes definiert.

Aus der DE 296 15 514 U1 ist ein elektronisches Abstandsmessgerät mit einem Sender für einen Messstrahl und einen Empfänger für einen zurückkehrenden, reflektierten Strahl, sowie einer Auswerteeinheit zur Ermittlung des Abstandes vom Messgerät zum Reflektionsort bekannt, welches an zwei, sich parallel gegenüber liegenden Flächen seines im wesentlichen quaderförmigen Gehäuses je einen Messspatel aufweist, der vor- und zurückschiebbar am Gehäuse befestigt ist. Die Messspatel, die in Führungen beiderseits am Gerätegehäuse befestigt sind, sind einerseits bis an die Vorderfläche des Gerätes zurückziehbar bzw. in einer anderen stabilen Endstellung um eine genau vorgegebene Strecke ausziebar. Die ausgezogene Position der Messspatel wird automatisch durch in den Führungen dieser Spatel oder in der Gehäusewand des Messgerätes vorhandene Tastschalter festgestellt und einer Auswerteeinheit des elektronischen Abstandsmessgerätes übermittelt.

Aus der DE 100 55 510 A1 ist ein optoelektronisches Laserdistanzmessgerät bekannt, welches auf seiner der Messrichtung abgewandten Gehäuserückseite einen flächigen Messanschlag aufweist, der aus dem Gehäuse heraus geklappt werden kann.

Ein weiteres Entfernungsmessgerät ist aus DE 103 44 586 bekannt.

### Offenbarung der Erfindung

### Vorteile der Erfindung

Das erfindungsgemäße Entfernungsmessgerät mit den Merkmalen des Anspruchs 1 hat den Vorteil, dass ein Messanschlagskörper des Messgerätes derart im Gehäuse des Gerätes gelagert ist, dass der Messanschlagskörper bei Lösung einer Arretierungsvorrichtung selbsttätig aus dem Gehäuse heraus schwingt und wahlweise in eine erste und/oder eine zweite Messposition gestellt wird.

Moderne Entfernungsmessgeräte werden zunehmend kompakter, wobei die Miniaturisierung der Komponenten derartiger Geräte mittlerweile so weit fortgeschritten ist, dass die manuelle Bedienung von mechanischen Bauteilen des Gehäuses eine gewisse Fingerfertigkeit bzw. spezielle Hilfsmittel erfordert.

Bei dem erfindungsgemäßen Entfernungsmessgerät kann ein im Gerät vorgesehener Messanschlag, der zumindest einen Referenzpunkt für die Entfernungsmessung mit diesem Gerät definiert, automatisch, beispielsweise auf Knopfdruck, durch Lösung einer Arretierungsvorrichtung ausgefahren werden, so dass er selbsttätig in eine von zumindest zwei möglichen Messpositionen gestellt wird. Beim manuellen Einklappen des Messanschlages in das Gerät verriegelt dieser ebenfalls automatisch und verbleibt dann in seiner Parkposition. Insbesondere in diesem Fall bildet dann eine Gehäusefläche, insbesondere die der Messrichtung abgewandte Gehäuserückseite eine entsprechende Referenzebene für die Entfernungsmessung. Auf diese Weise ist eine einfache, bedienerfreundliche Handhabung eines Entfernungsmessgerätes und insbesondere des Messanschlages eines solchen Gerätes möglich. In vorteilhafter Weise kann dabei der Messanschlagskörper zumindest in eine erste oder alternativerweise in eine zweite Messposition verfahren werden.

Durch die in den abhängigen Ansprüchen aufgeführten Merkmale sind vorteilhafte Weiterbildungen und Verbesserungen des erfindungsgemäßen Entfernungsmessgerätes möglich.

In einer vorteilhaften Ausführungsform des erfindungsgemäßen Messgerätes ist der Messanschlagskörper schwenkbar im Gehäuse des Gerätes gelagert und wird bei Lösung seiner Arretierung selbsttätig aus dem Gehäuse heraus in seine jeweilige Messposition verschwenkt.

In seiner ersten ausgefahrenen bzw. ausgeschwenkten Position, die einer möglichen Messposition des Entfernungsmessgerätes entspricht, steht der Messanschlagskörper im Wesentlichen senkrecht zu einer ersten Referenzebene des Gerätes, die insbesondere durch die Gehäuserückseite des Entfernungsmessgerätes gebildet wird.

In dieser ausgefahrenen ersten Messposition definiert der Messanschlagskörper, insbesondere durch seine Spitze, einen Referenzpunkt, der in einer Ebene liegt, die zur ersten Referenzebene des Gehäuses parallel ausgebildet und beabstandet ist. In vorteilhafter Weise definiert der Messanschlagskörper in seiner zweiten angefahrenen Messposition mit einem zweiten, am Messanschlagskörper ausgebildeten Messanschlag eine Referenzebene.

In vorteilhafter Weise ist die durch den zweiten Messanschlag des Messanschlagskörpers in seiner zweiten Messposition aufgespannte Ebene die am Gehäuse ausgebildete Referenzebene.

Dabei wird der zweite Messanschlag des Messanschlagskörpers in seiner zweiten Messposition durch eine messobjektzugewandte Anschlagfläche des Messanschlagskörpers gebildet. Die objektzugewandte Anschlagfläche des Messanschlagskörpers in seiner zweiten Messposition kommt dabei in der ersten Referenzebene des Gehäuses, insbesondere der Gehäuserückseite, zu liegen.

In vorteilhafter Weise ist der Messanschlagskörper des erfindungsgemäßen Entfernungsmessgerätes im Wesentlichen flächig, insbesondere streifenförmig ausgebildet. Dabei besitzt der Messanschlagskörper einen im Wesentlichen punktförmig ausgebildeten Messanschlag.

In vorteilhafter Weise weist der Messanschlagskörper des erfindungsgemäßen Messgerätes zumindest eine Schwenkachse auf, welche senkrecht zur Messrichtung des Messgerätes ausgebildet ist. Das erfindungsgemäße Entfernungsmessgerät weist darüber hinaus in einer vorteilhafter Ausführungsform Mittel zur Erfassung der Position und/oder des Schwenkwinkels des Messanschlagskörpers auf. Über diese Mittel kann eine Elektronik des Messgerätes die aktuelle Position des Messanschlagskörpers detektieren und die dadurch definierte Referenzebene für die Abstandsmessung an eine Auswerteeinheit des Messgerätes übermitteln.

In vorteilhafter Weise ist das erfindungsgemäße Entfernungsmessgerät als ein optoelektronisches Entfernungsmessgerät, insbesondere als ein Laserentfernungsmesser, ausgebildet, der als kompakter, handgehaltener Abstandsmesser in einer Vielzahl von Aufgabengebieten Verwendung finden kann.

Weitere Vorteile des erfindungsgemäßen Messgerätes sind der nachfolgenden Zeichnung sowie der zugehörigen Beschreibung zu entnehmen.

### Zeichnung

In der Zeichnung ist ein Ausführungsbeispiel eines erfindungsgemäßen Entfernungsmessgerätes dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu neuen, weiteren sinnvollen Kombinationen zusammenfassen.

Es zeigen:
Figur 1 eine perspektivische Darstellung einer Ausführungsform eines erfindungsgemäßen Entfernungsmessgerätes in einer Übersichtsdarstellung,
Figur 2 eine Aufsicht des Entfernungsmessgerätes gemäß Figur 1,
Figur 3 eine Detaildarstellung des rückseitigen Endes des erfindungsgemäßen Entfernungsmessgerätes zur Veranschaulichung der Funktion des Anschlagkörpers,
Figur 4 eine weitere Detaildarstellung des rückseitigen Endes eines erfindungsgemäßen Entfernungsmessgerätes mit aus dem Gehäuse herausgenommenem Mess-anschlagskörper,
Figur 5 eine alternative Darstellung des rückseitigen Endes eines erfindungsgemäßen Entfernungsmessgerätes sowie der zugehörige Messanschlagskörper und die Schwenkmechanik dieses Messanschlagskörpers,
Figuren 6a bis 6f diverse Schnitte durch das rückseitige Ende eines erfindungsgemäßen Entfernungsmessgerätes zur Verdeutlichung der Funktion und des Aufbaus des erfindungsgemäßen Messanschlagskörpers.

### Beschreibung eines Ausführungsbeispiels

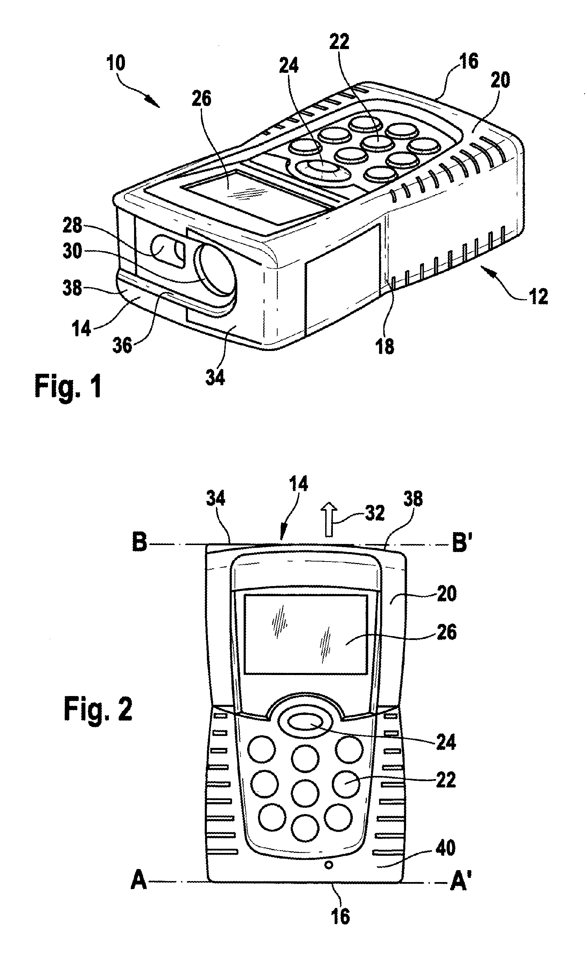

In Figur 1 ist ein Entfernungsmessgerät 10 gezeigt, welches ein Gehäuse 12 mit einer Gehäusevorderseite 14 und einer Gehäuserückseite 16 aufweist. Das

Gehäuse 12 ist im wesentlichen quaderförmig ausgebildet und weist jedoch eine deutliche Taille 18 im Bereich der Mitte der Längsausstreckung des Messgerätes auf.

Auf der Oberseite 20 des Gehäuses 12 sind verschiedene Funktionstasten 22 für die Ein- bzw. Ausschaltung und den Abruf verschiedener Messprogramme, sowie eine Messtaste 24 zur Auslösung eines Messvorgangs angeordnet. Darüber hinaus befindet sich an der Oberseite 20 des Messgerätes 10 eine Ausgabeeinheit in Form einer Anzeige 26, mittels der beispielsweise ein ermittelter Messwert sowie zusätzliche Informationen über das ausgewählte Messprogramm angezeigt werden können.

Das Messgerät 10 weist an seiner Gehäusevorderseite 14 eine Austrittsöffnung 28 für die Messstrahlung, beispielsweise einen modulierten Laserstrahl auf. Eine zweite Öffnung 30 bildet sie Eintrittsöffnung für das an einem Messobjekt reflektierte Messsignal.

Im Gehäuseinneren befindet sich neben einer Sendeeinheit sowie einer Empfangseinheit für das Messsignal, eine entsprechende Auswerteeinheit, die aus der Laufzeit des Messsignals, insbesondere aus einer vergleichenden Phasenmessung des modulierten Messsignals, die Entfernung des Messgerätes zu einem zu vermessenden Messobjekt bestimmt.

Figur 2 zeigt eine Aufsicht auf die Gehäuseoberseite 20 des Ausführungsbeispiels gemäß Figur 1.

Die Gehäuserückseite 16 bildet eine erste Referenzebene AA' zur Anlage des Messgerätes, beispielsweise an eine Wand. Die durch die Gehäuserückseite 16 gebildete Referenzebene AA' verläuft im Wesentlichen, d.h. bis auf mechanische bzw. herstellungsbedingte Toleranzen, senkrecht zu der durch den Pfeil 32 in Figur 2 gekennzeichnete Messrichtung des Entfernungsmessgerätes.

Die Gehäusevorderseite 14 ist im Wesentlichen gekrümmt ausgebildet und besitzt im Bereich der Messsignaleintrittsöffnung 30 einen ebenen Teilbereich 34, der eine Referenzebene BB' definiert, die parallel zur ersten Referenzebene AA' verläuft. Der ebene Teilbereich 34 der Gehäusevorderseite ist auf der der Messsignalaustrittsöffnung 28 abgekehrten Seite der Messsignaleintrittsöffnung 30 ausgebildet und umgreift letztere zumindest teilweise, wie dies in Figur 1 deutlich zu erkennen ist. Auf diese Weise besitzt der ebene Teilbereich 34 der Gehäusevorderseite eine Ausnehmung 36, durch die das Messsignal in die Messsignaleintrittsöffnung eintreten kann. Mit Hilfe des ebenen Teilbereichs 34 der Gehäusevorderseite kann das Messgerät auch mit seiner Vorderseite 14 an eine Referenzfläche angelegt werden, ohne dass die Gefahr besteht, dass ein Anwender bei dieser Anlage die Messsignalaustrittsöffnung 28 verdeckt. Um einen Anwender davon abzuhalten, das erfindungsgemäße Entfernungsmessgerät im Bereich der Messsignalaustrittsöffnung 28 an eine Referenzfläche, beispielsweise eine Kante anzulegen, besitzt die Gehäusevorderseite 14 im Bereich der Messsignalaustrittsöffnung 28 einen gekrümmten Teilbereich 38, so dass in diesem Bereich eine Anlage des Messgerätes parallel zu Messkante nicht möglich ist.

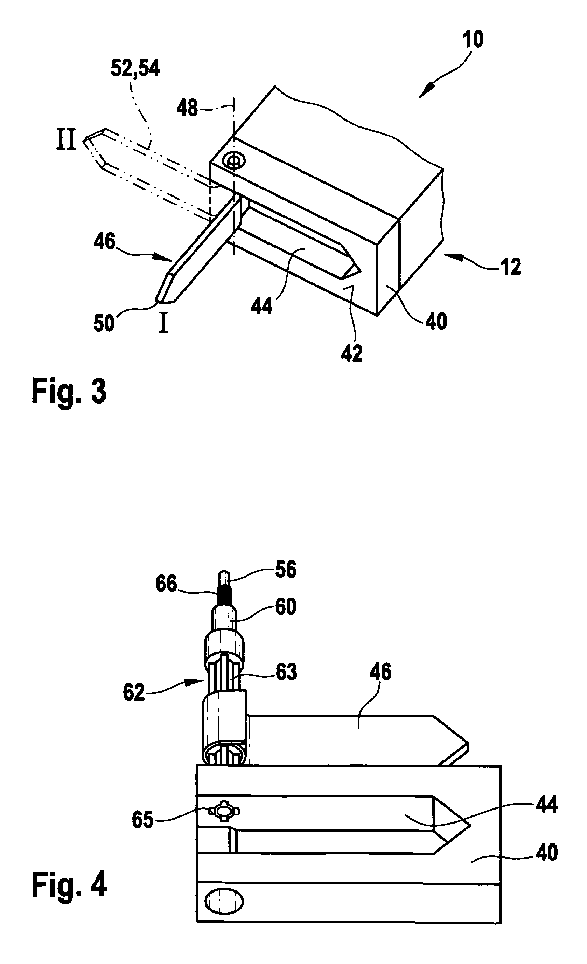

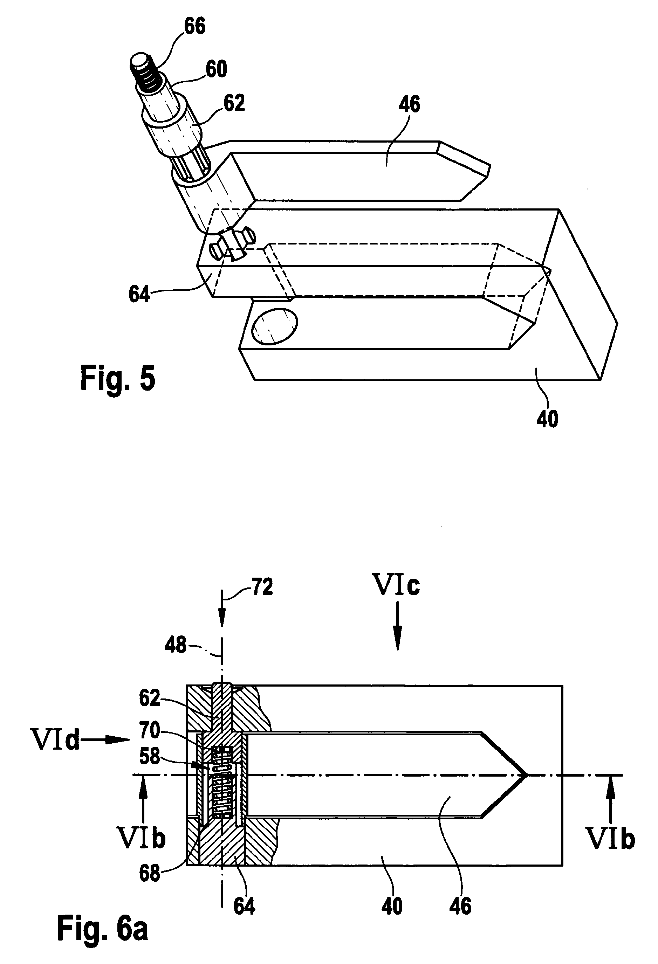

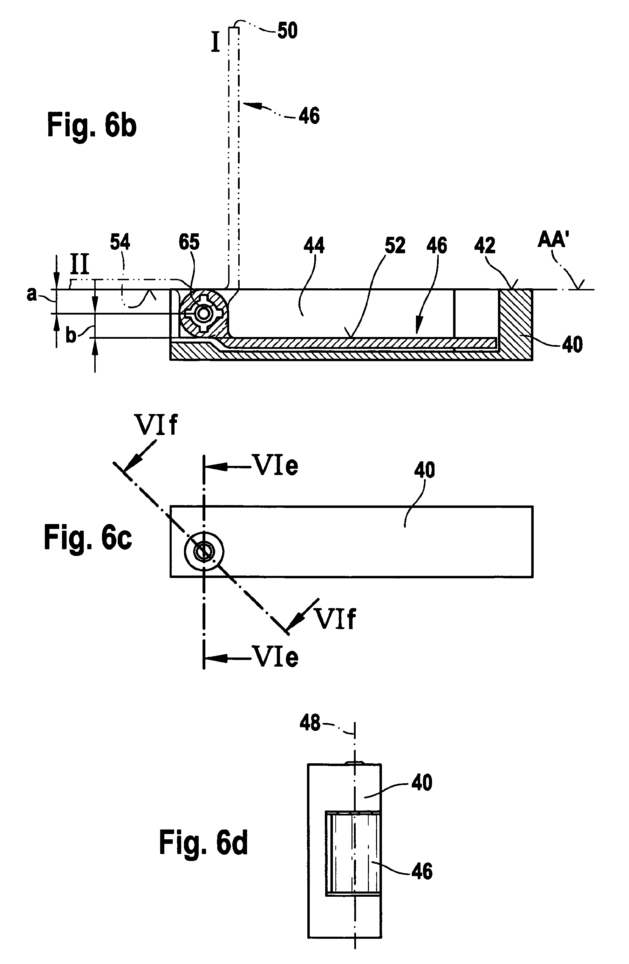

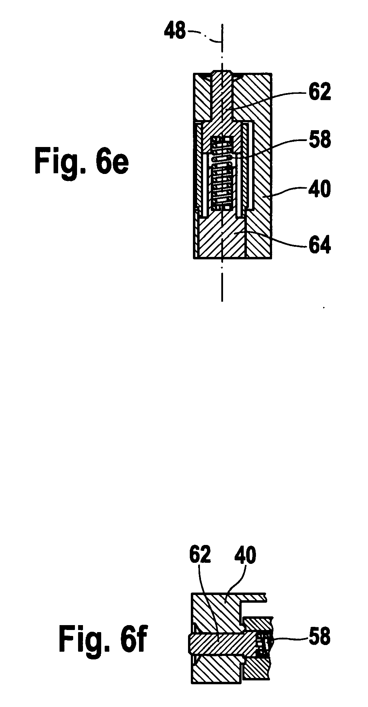

Figur 3 zeigt in einer schematischen Darstellung das rückseitige Ende 40 eines erfindungsgemäßen Laserentfernungsmessers 10. Das rückseitige Ende 40 definiert mit seiner rückseitigen Oberfläche 42 eine Referenzebene AA' des erfindungsgemäßen Erfindungsmessgerätes. In das rückseitige Ende 40 eingelassen ist eine Vertiefung bzw. Öffnung in der der Messanschlagskörper 46 in seiner Parkposition, das heißt im nicht ausgefahrenen Zustand zu liegen kommt (vgl. hierzu auch die Darstellung in Figur 6a). Der Messanschlagskörper 46 ist im Wesentlichen flächig, bzw. streifenförmig ausgebildet und um eine Drehachse 48 schwenkbar. Wird eine - noch zu beschreibende - Arretiervorrichtung des Messanschlagskörpers 46 betätigt, insbesondere gelöst, so schwingt der Messanschlagkörper selbsttätig aus seiner Parkposition in der Öffnung 44 des Gehäuses des erfindungsgemäßen Entfernungsmessgerätes heraus und kann dabei wahlweise eine erste Messposition I bzw. eine zweite Messposition II einnehmen.

In seiner ersten Messposition I steht der Messanschlagskörper im Wesentlichen senkrecht zu der durch die rückseitige Gehäuseoberfläche 42 aufgespannten Referenzebene AA'. In vorteilhafter Weise besitzt der Messanschlagskörper 46 an seinem, der Drehachse 48 abgewandten Ende ein im Wesentlichen spitz zulaufendes Ende, welches einen im Wesentlichen punktförmigen ersten Messanschlag 50 definiert. In der ersten Messposition I des Messanschlagskörpers 46 kann dieser mit der Spitze gegen eine zurückgesetzte Referenzfläche, beispielsweise eine tiefer liegende Nut, eine Raumecke, eine Rollladenschiene oder gegen eine innen liegende Kante, wie beispielsweise die Ecke einer Fensterlaibung angelegt werden, um eine Messung der Entfernung vom ersten Messanschlag 50 zu einem zu vermessenden Objekt zu ermöglichen.

Der Messanschlagskörper 46 muss dabei nicht manuell in die Messposition bewegt werden. Er bewegt sich nach Betätigung einer Arretierungsvorrichtung, beispielsweise einer Entriegelungstaste, beispielsweise durch eine Feder getrieben, in die erste Messposition I. In dieser Messstellung I steht der Messanschlagskörper 46 dann im Wesentlichen senkrecht zu der durch die rückseitige Gehäuseoberfläche 42 aufgespannten Referenzebene AA'. Durch eine weitere Betätigung bzw. eine längere Betätigung, beispielsweise einen längeren Druck auf die Entriegelungstaste der Arretierungsvorrichtung des Messanschlagskörpers, bewegt sich dieser in eine zweite Messstellung II.

In dieser zweiten Messstellung II bildet der Messanschlagskörper mit seiner objektzugewandten Fläche 52 einen zweiten, insbesondere flächigen Messanschlag 54 als Referenzebene für eine Entfernungsmessung. Dazu kann das Gerät mit der objektzugewandten Fläche 52 des Messanschlagskörpers 46 gegen die zu messende Bezugsfläche angelegt werden. In vorteilhafter Weise liegt die durch die objektzugewandte Fläche 52 des Messanschlagskörpers 46 gebildete Messanschlag 54 dabei in der von der rückseitigen Oberfläche 42 des Gehäuses der erfindungsgemäßen Vorrichtung aufgespannten Referenzebene AA', wie dies insbesondere auch der Darstellung der Figur 6b zu entnehmen ist. Somit wird bei einer Abstandsmessung mit dem Messanschlagskörper in seiner Parkposition in der Öffnung 44 des Gerätes einerseits und in seiner zweiten Messposition II andererseits dieselbe Referenzebene AA' zur Abstandsmessung verwendet.

Figur 4 zeigt das rückseitige Ende 40 des erfindungsgemäßen Entfernungsmessers in einer Darstellung, bei der der Messanschlagskörper 46 inklusive Stellwelle 56 sowie Arretiermechanismus aus dem Gehäuse - der besseren Sichtbarkeit wegen - aus dem Gehäuse hervorgehoben worden ist. Auf der Welle 56 sitzt ein erstes Federelement 66, zur axialen Vorspannung eines Entriegelungsknopfes, gefolgt von einer Hülse 60 sowie dem eigentlichen Verriegelungsmechanismus 62.

Die Lagerung des beweglichen Messanschlagskörpers 46 ist dabei mit dem Rastmechanismus bzw. einer Arretiervorrichtung verbunden. Diese Vorrichtung erlaubt das automatische Ausklappen und Ausrasten in den vorgegebenen Messpositionen bzw. Winkelpositionen des Messanschlagskörpers.

Ein Rastelement 63, welches fest mit der Schwenkwelle 56 verbunden ist, kann dabei beispielsweise nach Erzeugung eines Drucks in axialer Richtung der Welle 56 aus einer entsprechenden Passung 65 des rückseitigen Endes 40 des Gehäuse hervortreten und die Verrastung freigeben. Durch die Feder 58 getrieben wird der Messanschlagkörper um 90° geschwenkt, bis das Rastelement 63 erneut in entsprechend um 90° verschobene Öffnungen der Passung 65 eingreifen kann. In dieser Messstellung I steht der Messanschlagskörper 46 dann im Wesentlichen senkrecht zu der durch die rückseitige Gehäuseoberfläche 42 aufgespannten Referenzebene AA'. Durch eine weitere Betätigung aus dieser Stellung heraus bzw. durch eine längere Betätigung, beispielsweise einen längeren Druck auf die Entriegelungstaste der Arretierungsvorrichtung des Messanschlagskörpers, aus der 0°-Parkstellung heraus, bewegt sich Messanschlagkörper in eine zweite Messstellung II. Der Messanschlagskörper verriegelt dabei jeweils formschlüssig in den beiden Messpositionen I und II, indem das Rastelement 63 in entsprechende Öffnungen der Passung 65 eingreift..

Wie insbesondere den Darstellungen der Figur 6a bzw. Figur 6e zu entnehmen ist, beinhaltet die Arretiervorrichtung neben der Stellfeder 58, welche auf Druck und Torsion wirkt, den Gegenhalter 64 der Feder sowie eine Verriegelung 62, bei der ein Rastelement 63 welches mit der Schwenkwelle 56 verbunden ist in eine gehäusefeste Passung 65 in verschiedenen, jeweils 90° voneinander getrennten Stellungen eingreifen kann, wie dies in Figur 4 und Figur 6b dargestellt ist. Dabei ist das eine Ende 68 der Stellfeder 58 verdrehsicher mit dem Gegenhalter 64 und somit mit dem Gehäuse 40 verbunden. Das andere axiale Ende 70 der Feder 58 ist mit dem Verriegelungselement 62, insbesondere mit dem Rastelement 63 verbunden. Der Messanschlagskörper 46 ist dabei ebenfalls drehfest mit der Schwenkwelle 56 und somit auch mit dem Rastelement 63 verbunden und gegenüber dem Gehäuse 40 und insbesondere gegenüber dem Gegenhalter 64 verdrehbar. Die Torsionskraft der Feder 58 drückt Verriegelungselement 62 gegen das Gehäuse, so dass das Ver-riegelungselement 62 und das Gehäuse 40 gegeneinander arretiert sind. Die stellfeder 58 ist somit in der in Figur 6b dargestellten 0°-Lage mit einem definierten Drehmoment vorgespannt

Durch Betätigung der Arretierungsvorrichtung, das heißt beispielsweise durch das Betätigen eines entsprechenden Druckknopfes in axialer Richtung 72 der Schwenkwelle 56 (siehe Figur 6a) wird das Rastelement aus der 0° Stellung der Passung 65 herausgedrückt, wird die Verbindung zwischen dem Gehäuse 40 und dem Rastelelement 63 des Verriegelungselements 62 gelöst. Die Feder 58 überträgt sodann das Vorspannmoment vom Gehäuse 40 über das Verriegelungselement 62 auf den Messanschlagskörper 46.

Der Messanschlagskörper 46 schwenkt dadurch aus seiner Nulllage in der Öffnung 44 des Gehäuses 40 um die Drehachse 48 aus dem Gehäuse 40 heraus.

Der Messanschlagskörper 46 verriegelt formschlüssig in den beiden Messpositionen I und II. Dies hat insbesondere den Vorteil, dass der Messanschlagskörper auch im Falle, dass der Anschlag an die Messebene mit einer gewissen Andruckskraft angelegt wird, dieser nicht nachgeben kann. Ein solches Nachgeben des Messanschlagskörpers würde unweigerlich zu einer Fehlmessung der Abstandsmessung führen.

In vorteilhafter Weise ist die Bewegung des Messanschlagskörpers aus seiner 0°-Stellung heraus gedämpft Dies hat den Vorteil, dass die Verriegelung nur einmal zum Entriegeln des Systems betätigt werden muss. Das Verriegeln in der nächstmöglichen Winkelstellung bzw. Messposition erfolgt durch die Federkraft automatisch, indem das Rastelement 63 selbsttätig in die Öffnungen der Passung 65 eingreifen kann. Aus dieser ersten Messposition I heraus, kann dann wiederum durch einmaliges Entriegeln der Messanschlagskörper in die nächste Winkellage bzw. die nächste Messposition, beispielsweise II, geschwenkt werden.

Das Zurückschwenken in die Nulllage, bei der der Messanschlagskörper wiederum vollständig in der Öffnung 44 des Gehäuses 40 zu liegen kommt, erfolgt manuell, indem die Rastung 63,65 entriegelt wird und Messanschlagskörper 46 gegen das Federmoment zurück in die Ausgangslage geschwenkt wird. Bei entsprechender Ausgestaltung der Rastung kann sich diese durch die Rückstellkraft selbst entriegeln. Dazu kann beispielsweise eine Anlaufschräge verwendet werden, die jedoch so flach ausgestaltet sein sollte, dass kein Selbsthemmungseffekt entsteht. Durch die manuelle Rückstellbewegung des Messanschlagskörpers wird die Feder wiederum vorgespannt, so dass die Feder in ihrer Nullgradlage mit einem definierten Drehmoment vorgespannt ist.

Die erwünschte gedämpfte Bewegung ist beispielsweise realisierbar durch Flüssigkeitsdämpfung bzw. durch Reibung. Dazu kann beispielsweise der Zwischenraum zwischen dem Gegenhalter 64 und dem Verriegelungselement 62 mit einem hochviskosen Fluid gefüllt werden, so dass sich zwischen dem Verriegelungselement 62 und dem Messanschlagskörper 46 ein mit Fluid gefüllter Scherspalt ausbildet.

In den Figuren 6a bis 6f sind diverse Schnittdarstellungen des erfindungsgemäßen Messanschlagskörpers mit seinem Arretierungssystem dargestellt. Wie insbesondere der Figur 6b zu entnehmen ist, ist der Abstand a der Schwenk- bzw-Drehachse 48 des zweiten Messanschlages 54 des Messanschlagskörpers 46 zur rückseitigen Oberfläche 42 des Messgerätes gleich dem Abstand b der Schwenkachse 48 zur Innenfläche 52 des Messanschlagskörpers 46, falls dieser in seiner 0°-Parkposition in der Öffnung 44 des Gehäuses anliegt. Bei einer derartigen Ausgestaltung der Proportionen der Lage der Schwenkachse zu den Anlageflächen ergibt sich der Vorteil, dass in der Messposition II der zweite Messanschlag 54 in der Ebene AA' liegt, die durch die rückseitige Oberfläche 42 des Messgerätes aufgespannt wird. Dies bedeutet, dass für die 0°-Parkposition sowie die 180°. Messposition II dieselbe Referenzebene zum Einsatz kommt, so dass für die Messposition II im Prinzip keine Lageerkennung für den Messanschlagskörper erforderlich ist.

Für die Messposition I, wie diese ebenfalls in Figur 6b angedeutet ist, ist jedoch eine Positionserkennung für den Messanschlagskörper sinnvoll, da der erste Messanschlag 50 in diesem Falle in einer zur Referenzebene AA' beabstandeten zweiten Referenzebene zu liegen kommt. Eine derartige Positionserkennung für den Messanschlagskörper kann beispielsweise durch einen oder mehrere Endlagen- oder Endzonenschalter oder beispielsweise auch durch einen Taster, insbesondere einen Hallsensor, realisiert werden. Ein entsprechendes Positionssignal geht dann als Eingangssignal an die Auswerteelektronik des Messgerätes, um den veränderten Referenzpunkt der Messung bei der Auswertung der Abstandsmessung zu berücksichtigen.

Das erfindungsgemäße Messgerät ist nicht auf die in den Zeichnungen dargestellten Ausführungsformen beschränkt.

Insbesondere ist beispielsweise die Wirkrichtung der Feder 58 nicht auf Druck beschränkt. Darüber hinaus ist auch eine Verriegelung bzw. Verrastung prinzipiell möglich, die die Stellung des Messanschlagkörpers abweichend von einem 90° Raster ermöglicht.

## Patentansprüche

1. Entfernungsmessgerät (10) zur berührungslosen Abstandsmessung, insbesondere ein Handgerät, mit einem Gehäuse (12,40), das eine in Messrichtung (32) weisende Gehäusevorderseite (14) und eine davon abgekehrte Gehäuserückseite (16) aufweist, wobei die Gehäuserückseite (16) eine erste Referenzebene (AA') für die Abstandsmessung bildet, sowie mit zumindest einem Messanschlag (50) eines Messanschlagkörpers (46), der aus dem Gehäuse (12) heraus bewegbar ist, **dadurch gekennzeichnet, dass** der Messanschlagkörper (46) derart im Gehäuse (12,40) gelagert ist, dass dieser nach Lösung einer Arretierungsvorrichtung (62,63,65) selbsttätig aus dem Gehäuse (12,40) heraus fährt und wahlweise zumindest in eine erste (I) oder in eine zweite (II) Messposition verfahren wird.

2. Entfernungsmessgerät nach Anspruch 1, **dadurch gekennzeichnet, dass** der Messanschlagkörper (46) schwenkbar im Gehäuse (12,40) gelagert ist und bei Lösung der Arretierung (63,65) selbsttätig aus dem Gehäuse (12,40) heraus in seine jeweilige Messposition verschwenkt wird.

3. Entfernungsmessgerät nach Anspruch 1 oder 2, **dadurch gekennzeichnet, dass** der Messanschlagkörper (46) in einer ersten Messposition (I) im wesentlichen senkrecht zur ersten Referenzebene (AA') steht.

4. Entfernungsmessgerät nach Anspruch 1, 2 oder 3, **dadurch gekennzeichnet, dass** der Messanschlagkörper (46) in seiner ersten Messposition (I) mit seinem ersten Messanschlag (50) einen Referenzpunkt definiert, der in einer zur ersten Referenzebene (AA') parallelen, zweiten Ebene liegt.

5. Entfernungsmessgerät nach einem der vorhergehenden Ansprüche, **dadurch gekennzeichnet, dass** der Messanschlagkörper (46) in seiner zweiten Messposition (II) im wesentlichen parallel zur ersten Referenzebene (AA') steht.

6. Entfernungsmessgerät nach Anspruch 1, 2 oder 5, **dadurch gekennzeichnet, dass** der Messanschlagkörper (46) in seiner zweiten Messposition (II) mit einem zweiten Messanschlag (54) eine Referenzebene definiert.

7. Entfernungsmessgerät nach Anspruch 6, **dadurch gekennzeichnet, dass** die durch den zweiten Messanschlag (54) des Messanschlagkörpers (46) in seiner zweiten Messposition (II) aufgespannte Ebene die Referenzebene (AA') ist

8. Entfernungsmessgerät nach Anspruch 5, **dadurch gekennzeichnet, dass** der zweite Messanschlag (54) des Messanschlagkörpers (46) in seiner zweiten Messposition (II) durch eine objektzugewandte Anschlagfläche (52) gebildet ist.

9. Entfernungsmessgerät nach Anspruch 7, **dadurch gekennzeichnet, dass** die objektzugewandte Anschlagfläche (52) des Messanschlagkörper (46) in seiner zweiten Messposition (II) in der ersten Referenzebene (AA') der Gehäuserückseite liegt.

10. Entfernungsmessgerät nach einem der vorhergehenden Ansprüche, **dadurch gekennzeichnet, dass** der Messanschlagskörper (46) im wesentlichen flächig, insbesondere streifenförmig, ausgebildet ist.

11. Entfernungsmessgerät nach zumindest einem der vorhergehenden Ansprüche 2 bis 10, **dadurch gekennzeichnet, dass** der Messanschlagskörper (46) mindestens eine Schwenkachse (56,74') senkrecht zur Messrichtung (32) aufweist.

12. Entfernungsmessgerät nach einem der vorhergehenden Ansprüche, **dadurch gekennzeichnet, dass** Mittel zur Erfassung einer Position und/oder eines Schwenkwinkels des Messanschlagkörpers (46) vorgesehen sind.

13. Entfernungsmessgerät nach einem der vorhergehenden Ansprüche, **dadurch gekennzeichnet, dass** das Messgerät (10) als opto-elektronisches Messgerät, insbesondere als ein Laser-Entfernungsmesser ausgebildet ist.

## Claims

1. Distance measuring unit (10) for the contactless measurement of distance, in particular a handheld unit, having a housing (12, 40) which has a housing front side (14), which points in the measuring direction (32), and a housing rear side (16) which faces away from said front side, the housing rear side (16) forming a first reference plane (AA') for the distance measurement, and having at least one measurement stop (50) of a measurement stop body (46) which can be moved out of the housing (12), **characterized in that** the measurement stop body (46) is mounted in the housing (12, 40) in such a manner that, when a locking apparatus (62, 63, 65) is released, said body automatically moves out of the housing (12, 40) and is selectively moved at least into a first measuring position (I) or into a second measuring position (II).

2. Distance measuring unit according to Claim 1, **characterized in that** the measurement stop body (46) is pivotably mounted in the housing (12, 40) and, when the locking means (63, 65) is released, is automatically pivoted out of the housing (12, 40) into its respective measuring position.

3. Distance measuring unit according to Claim 1 or 2, **characterized in that**, in its first measuring position (I), the measurement stop body (46) is essentially perpendicular to the first reference plane (AA').

4. Distance measuring unit according to Claim 1, 2 or 3, **characterized in that** the first measurement stop (50) of the measurement stop body (46) defines, in the first measuring position (I) of the latter, a reference point which is on a second plane which is parallel to the first reference plane (AA').

5. Distance measuring unit according to one of the preceding claims, **characterized in that**, in its second measuring position (II), the measurement stop body (46) is essentially parallel to the first reference plane (AA').

6. Distance measuring unit according to Claim 1, 2 or 5, **characterized in that**, in its second measuring position (II), the measurement stop body (46) defines a reference plane with a second measurement stop (54).

7. Distance measuring unit according to Claim 6, **characterized in that** the plane spanned by the second measurement stop (54) of the measurement stop body (46), in the second measuring position (II) of the latter, is the reference plane (AA').

8. Distance measuring unit according to Claim 5, **characterized in that** the second measurement stop (54) of the measurement stop body (46) is formed, in the second measuring position (II) of the latter, by a stop surface (52) which faces the object.

9. Distance measuring unit according to Claim 7, **characterized in that** the stop surface (52) of the measurement stop body (46), which faces the object, is in the first reference plane (AA') of the housing rear side in the second measuring position (II) of said body.

10. Distance measuring unit according to one of the preceding claims, **characterized in that** the measurement stop body (46) is essentially flat, in particular is in the form of a strip.

11. Distance measuring unit according to at least one of the preceding Claims 2 to 10, **characterized in that** the measurement stop body (46) has at least one pivot axis (56, 74') perpendicular to the measuring direction (32).

12. Distance measuring unit according to one of the preceding claims, **characterized in that** means for detecting a position and/or a pivot angle of the measurement stop body (46) are provided.

13. Distance measuring unit according to one of the preceding claims, **characterized in that** the measuring device (10) is in the form of an optoelectronic measuring unit, in particular in the form of a laser distance measuring instrument.

## Revendications

1. Télémètre (10) pour mesurer des distances sans contact, notamment appareil manuel, comprenant un boîtier (12, 40), qui présente un côté avant de boîtier (14) tourné dans la direction de mesure (32) et un côté arrière de boîtier (16) opposé à celui-ci, le côté arrière de boîtier (16) formant un premier plan de référence (AA') pour la mesure de distance, et comprenant au moins une butée de mesure (50) d'un corps de butée de mesure (46), qui peut être déplacé hors du boîtier (12), **caractérisé en ce que** le corps de butée de mesure (46) est monté dans le boîtier (12, 40) de telle sorte que celui-ci ressorte automatiquement du boîtier (12, 40) après libération d'un dispositif de blocage (62, 63, 65), et soit déplacé de manière sélective au moins dans une première (I) ou dans une deuxième (II) position de mesure.

2. Télémètre selon la revendication 1, **caractérisé en ce que** le corps de butée de mesure (46) est monté de manière pivotante dans le boîtier (12, 40) et est pivoté automatiquement hors du boîtier (12, 40) dans sa position de mesure respective lors de la libération du blocage (63, 65).

3. Télémètre selon la revendication 1 ou 2, **caractérisé en ce que** le corps de butée de mesure (46) est essentiellement perpendiculaire au premier plan de référence (AA') dans une première position de mesure (I).

4. Télémètre selon la revendication 1, 2 ou 3, **caractérisé en ce que** le corps de butée de mesure (46) définit dans sa première position de mesure (I) avec sa première butée de mesure (50) un point de référence qui se trouve dans un deuxième plan parallèle au premier plan de référence (AA').

5. Télémètre selon l'une quelconque des revendications précédentes, **caractérisé en ce que** le corps de butée de mesure (46), dans sa deuxième position de mesure (II), est essentiellement parallèle au premier plan de référence (AA').

6. Télémètre selon la revendication 1, 2 ou 5, **caractérisé en ce que** le corps de butée de mesure (46) définit, dans sa deuxième position de mesure (II), avec une deuxième butée de mesure (54), un plan de référence.

7. Télémètre selon la revendication 6, **caractérisé en ce que** le plan formé par rapport à la deuxième butée de mesure (54) du corps de butée de mesure (46) dans sa deuxième position de mesure (II) est le plan de référence (AA').

8. Télémètre selon la revendication 5, **caractérisé en ce que** la deuxième butée de mesure (54) du corps de butée de mesure (46) est formée dans sa deuxième position de mesure (II) par une surface de butée (52) tournée vers l'objet.

9. Télémètre selon la revendication 7, **caractérisé en ce que** la surface de butée (52) du corps de butée de mesure (46), qui est tournée vers l'objet, se trouve dans sa deuxième position de mesure (II), dans le premier plan de référence (AA') du côté arrière du boîtier.

10. Télémètre selon l'une quelconque des revendications précédentes, **caractérisé en ce que** le corps de butée de mesure (46) est réalisé sous forme essentiellement plane, notamment en forme de ruban.

11. Télémètre selon au moins l'une quelconque des revendications 2 à 10, **caractérisé en ce que** le corps de butée de mesure (46) présente au moins un axe de pivotement (56, 74') perpendiculairement à la direction de mesure (32).

12. Télémètre selon l'une quelconque des revendications précédentes, **caractérisé en ce que** des moyens pour détecter une position et/ou un angle de pivotement du corps de butée de mesure (46) sont prévus.

13. Télémètre selon l'une quelconque des revendications précédentes, **caractérisé en ce que** l'appareil de mesure (10) est réalisé sous forme d'appareil de mesure opto-électronique, notamment sous forme de télémètre laser.
